# EUROPÄISCHE PATENTSCHRIFT

(11) **EP 1 066 988 B1**
(45) Veröffentlichungstag und Bekanntmachung des Hinweises auf die Patenterteilung: **21.02.2007**
(21) Anmeldenummer: 00114469.0
(22) Anmeldetag: 06.07.2000
(51) Int. Cl.: B60C 3/04, B60C 13/00

(54) **Fahrzeugluftreifen**
Vehicle tyre
Bandage pneumatique pour véhicule

(30) Priorität: 09.07.1999 DE 19932028
(43) Veröffentlichungstag der Anmeldung: 10.01.2001
(73) Patentinhaber: Continental Aktiengesellschaft, 30165 Hannover (DE)
(72) Erfinder: Metge, Axel, 30179 Hannover (DE); Wies, Burkhard, Dr., 30455 Hannover (DE); Walczok, Mario, 30900 Wedemark (DE); Baumhöfer, Johannes Josef, 30900 Wedemark (DE)

(56) Entgegenhaltungen:
- FR-A- 2 647 716
- US-A- 5 117 886

## Beschreibung

Die Erfindung betrifft einen Fahrzeugluftreifen mit einem profilierten Laufstreifen, einem insbesondere mehrere Lagen umfassenden Gürtelverband, Wulstbereichen mit Wulstkernen und mit einer ein- oder mehrlagig ausgeführten Karkasse mit zumindest im Wesentlichen radial verlaufenden Festigkeitsträgern, wobei die Karkasse um die Wulstkerne und jeweils als Hochschlag zurück in die Seitenwände verläuft, und wobei im unbelasteten und drucklosen Zustand des Reifens sowie wenn dieser auf einer Felge montiert ist die Auslegung des Verlaufes der Karkasse von der Gleichgewichtsfigur abweicht, wobei im unbelasteten, drucklosen Zustand des Reifens, wenn dieser auf einer Felge montiert ist, die Karkasse im Bereich zwischen ihrer Anbindungsstelle zum Gürtel und der Stelle mit der größten Querschnittsbreite einen Radius bzw. mehrere Radien aufweist, die sämtlich kleiner sind als der Radius bzw. die Radien in jenem Bereich der Karkasse, der zwischen der Stelle mit der größten Querschnittsbreite und ihrer Anbindungsstelle zur Felge verläuft.

Ein Fahrzeugluftreifen der eingangs genannten Art ist beispielsweise aus der US 5,117,886 bekannt. Dieser Reifen ist derart ausgeführt, dass die Hochschläge der Karkasse, die auf den Wulstkernen sitzenden Kernprofile sowie zwischen den Kernprofilen und den Hochschlägen angeordnete zusätzliche Verstärkungslagen etwa bis auf die Mitte der Reifenseitenwände reichen, um diese zu versteifen. Derart ausgeführte Fahrzeugluftreifen sollen eine verbesserte Seitensteifigkeit und eine vergrößerte Kontaktfläche zum Untergrund aufweisen, insbesondere um die Seitenführungseigenschaften der Reifen zu verbessern.

Ein weiterer Reifen ist beispielsweise aus der GB-A 2 024 738 bekannt. Um unerwünschte Deformationen und Spannungen an den Gürtelkanten zu vermeiden, wird hier vorgeschlagen, auf bestimmte Weise über die Ausführung der Gürtellagen Einfluss auf den Karkassverlauf im drucklosen bzw. nahezu drucklosen Zustand gegenüber dem Karkassverlauf unter Innendruck zu nehmen.

Im britischen Patent 1 576 409 geht es darum, die Tragfähigkeit eines Fahrzeugluftreifens ohne Einbußen im Komfort oder ohne eine unerwünschte Erwärmung des Reifens in Kauf nehmen zu müssen zu erhöhen. Dazu wird hier vorgeschlagen, die Seitenwände bzw. die Karkasse mit einer vergleichsweise geringen Krümmung auszulegen und zu verhindern, dass diese unter Innendruck in eine mehr bauchige Form zurückkehrt. Zu diesem Zweck wird der Gürtelverband durch das Vorsehen besonderer Gürtellagen gegenüber Biegemomenten in Umfangsrichtung sehr widerstandsfähig ausgelegt.

Es ist üblich und gehört auch schon seit langem zum Stand der Technik, die Kontur der Karkasse im Reifen, die auch üblicherweise zumindest annähernd der Seitenwandkontur entspricht, bei gegebenem Innendruck in Abhängigkeit von der Karkasslänge in den Seitenwänden zu bestimmen bzw. zu errechnen. Dabei wird auch die Heizform für den Reifen so ausgelegt, dass es möglichst keine Veränderungen der Kontur der Karkasse bzw. der Kontur der Reifenseitenwände, ausgehend von der durch die Heizform bestimmten Kontur bis zu jener Kontur, die der Reifen im montierten Zustand unter Innendruck einnimmt, gibt. Bei einer derartigen Auslegung spricht man davon, dass die Karkasse gemäß ihrer Neutralen ausgelegt ist. Damit sollen unnötige Spannungen im Reifen durch etwaige Gestaltsveränderungen vermieden werden. Im Laufstreifenbereich besitzen Reifen ferner üblicherweise eine in Querrichtung gekrümmte Kontur, damit beim Einfedern unter Innendruck und Belastung die innerhalb der Fahrfläche, des bodenberührenden Bereiches, des Reifens wirkenden Aufstandsdrücke möglichst ausgeglichen sind, was zur Kraftübertragung und zum Aufbau der gewünschten Tragfähigkeit erforderlich ist. Diese Krümmung wird, wie auch die Krümmung der Karkasse in den Seitenwandbereichen, von der Reifenform vorgegeben, sie ist aber am Fertigprodukt auch vom konstruktiven Aufbau der festigkeitsgebenden Elemente, Festigkeitsträger im Gürtel und in der Karkasse, abhängig.

Bei der üblichen Auslegung des Verlaufes der Karkasse gemäß ihrer Neutralen, wo, wie oben erwähnt, kaum eine Konturänderung zwischen drucklosem Zustand und Zustand unter Innendruck stattfindet, werden beim Abrollen des Reifens unter Innendruck und Belastung jene Bereiche der Karkasse, die an den äußeren Seiten der üblicherweise vorgesehenen Wulstkernprofile liegen - diese Bereiche werden im Allgemeinen als Hochschläge bezeichnet - wechselnden Zug- und Druckspannungen ausgesetzt. Diese Belastungen sind unerwünscht, da sie einige Reifeneigenschaften negativ beeinflussen können und auch die Ursache von die Lebensdauer des Reifens reduzierenden Wulstschäden sein können.

Hier setzt nun die Erfindung ein, deren Aufgabe darin besteht, dieses Problem bei einem Fahrzeugluftreifen der eingangs genannten Art zu lösen.

Gelöst wird die gestellte Aufgabe erfindungsgemäß dadurch, dass das Verhältnis des kleinsten Radius der Karkasse zum größten Radius der Karkasse zwischen 1:1,1 und 1:2,2, insbesondere zwischen 1:1,4 und 1:2,0, beträgt.

Durch die erfindungsgemäßen Maßnahmen wird der Reifen, sobald er unter Innendruck gesetzt wird, sich in den Seitenwandbereichen so verformen, dass sich die Gleichgewichtskontur zumindest weitgehend wieder einstellt, wodurch in den Hochschlagbereichen der Karkasse nach außen gerichtete Zugspannungen erzeugt werden. Damit wird eine "Vorspannung" eingestellt, die zur Folge hat, dass beim Abrollen des Reifens unter Innendruck und Last im Bereich der Karkasshochschläge nur noch schwankende Zugspannungen wirken, die unerwünschten wechselnden Zug-Druckspannungen daher wegfallen.

Besonders günstig ist der Spannungsverlauf, der sich gemäß der gegenständlichen Erfindung im Bereich der Karkasshochschläge einstellt, dann, wenn die Auslegung derart erfolgt, dass der Radius der Karkasse im Bereich der Anbindungsstelle zum Gürtel am kleinsten, im Bereich der Anbindungsstelle zum Wulst am größten ist, wobei sich zwischen diesen beiden Stellen der Radius der Karkasse kontinuierlich vergrößert.

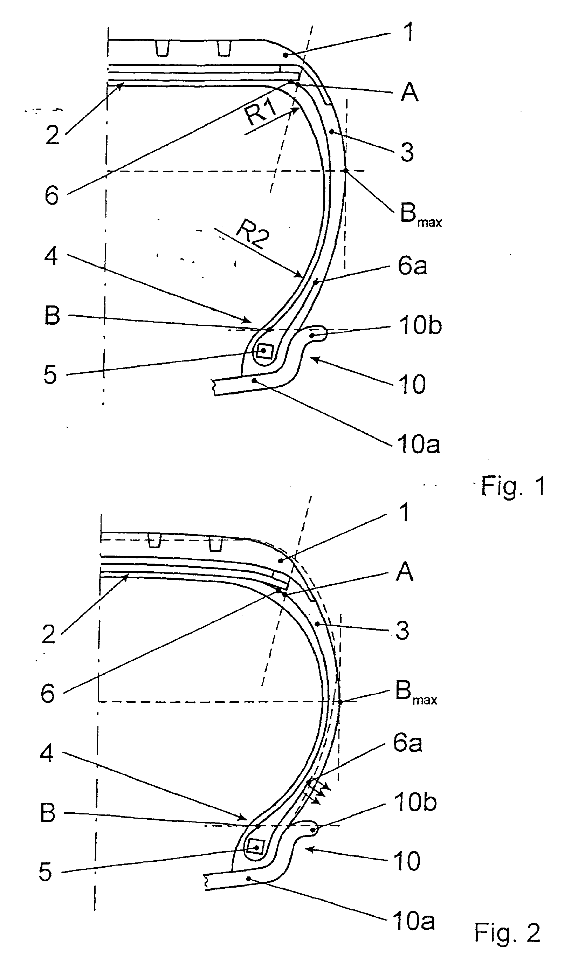

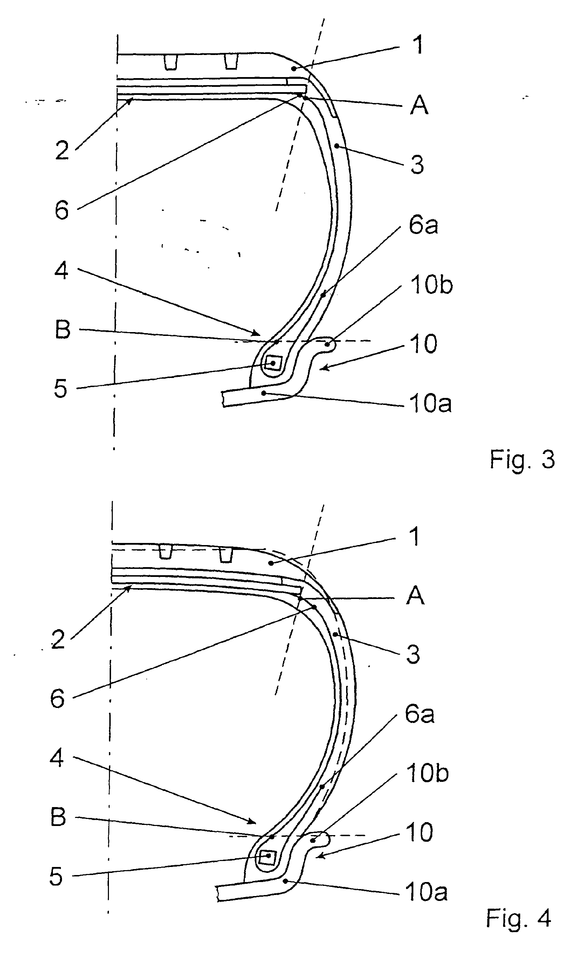

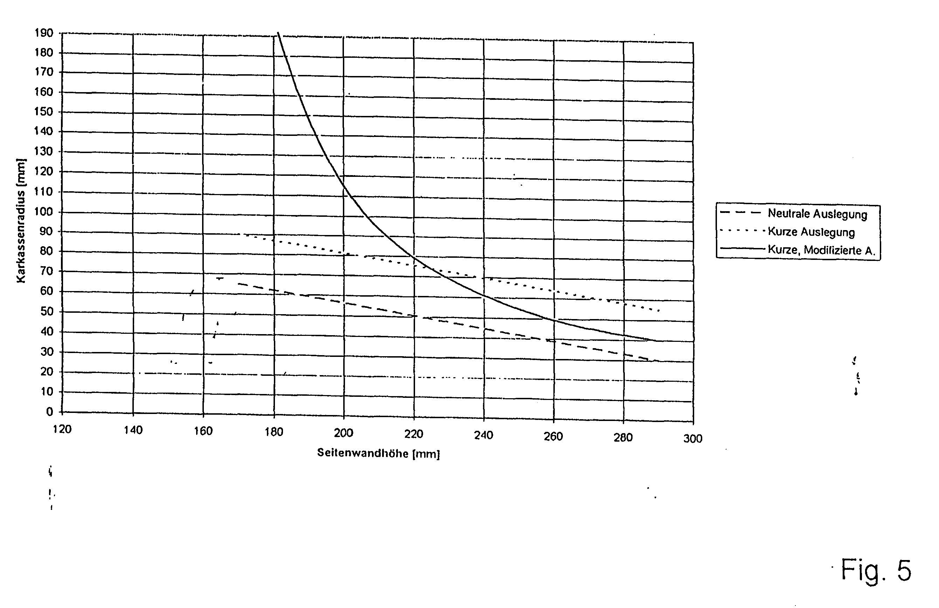

Weitere Merkmale, Vorteile und Einzelheiten der Erfindung werden nun anhand der Zeichnung, die Ausführungsbeispiele darstellt, näher beschrieben. Dabei sind Fig. 1 und Fig. 2 sowie Fig. 3 und 4 jeweils schematische Darstellungen von Querschnitten durch Hälften von Fahrzeugluftreifen, Fig. 1 und Fig. 3 zeigen den auf eine Feige montierten Reifen im drucklosen und unbelasteten Zustand, Fig. 2 und Fig. 4 den auf eine Felge montierten, unbelasteten Reifen unter Innendruck (Nenndruck gemäß E.T.R.T.O Standards), Fig. 5 ist ein Diagramm, welches den Verlauf des Karkassradius über die Seitenwandhöhe für einen nach den Stand der Technik und für erfindungsgemäß ausgeführte Reifen zeigt.

Die in Fig. 1 bis Fig. 4 im Querschnitt dargestellten Fahrzeugluftreifen sind für Personenkraftwagen vorgesehene Reifen in Radialbauart. Die Erfindung ist jedoch auf diesen Reifentyp nicht eingeschränkt und gleichermaßen auch bei Nutzfahrzeugreifen realisierbar.

Der in Fig. 1 bis Fig. 4 dargestellte Reifen ist auf einer Feige 10, von der lediglich die Wulstsitzfläche 10a und das Feigenhorn 10b dargestellt sind, angeordnet und weist einen profilierten Laufstreifen 1, einen Gürtelverband 2, Seitenwände 3, Wulstbereiche 4 mit Wulstkernen 5 und eine Radialkarkasse 6 auf. Der Gürtelverband 2 kann in herkömmlicher Art und Weise aufgebaut sein und wird daher insbesondere mehrere Gürtellagen mit einer kreuzenden Anordnung von Fertigkeitsträgem und gegebenenfalls auch eine Gürtelbandage als radial äußerste Lage mit in Reifenumfangsrichtung verlaufenden Fertigkeitsträgem umfassen. Bei den dargestellten Ausführungsbeispielen ist ferner die Karkasse 6 einlagig ausgeführt und besteht aus in eine Kautschuk- bzw. Gummimatrix eingebetteten und zumindest im Wesentlichen in radialer Richtung verlaufenden Festigkeitsträgern, vorzugsweise aus einem textilen Material. Die Karkasse 6 kann daher in herkömmlicher Art und Weise aufgebaut sein und selbstverständlich auch mehr als eine Lage umfassen. In den Wulstbereichen 5 ist die Karkasse 6 von innen nach außen um die Wulstkerne 5 herumgeführt und wieder in die Seitenwandbereiche rückgeführt. Die beiden rückgeführten Bereiche der Karkasse 6 bilden jeweils den Karkasshochschlag 6a.

Beim Abrollen von nach dem Stand der Technik ausgeführten Reifen unter Innendruck und Belastung sind die Hochschläge der Karkasse wechselnden Zug- und Druckspannungen ausgesetzt. Es ist bekannt, dass diese Belastungen zu einer unerwünschten Beeinflussung von verschiedenen Reifeneigenschaften führen können.

Um diese Spannungen in den Wulstbereichen abzubauen, wird gemäß der gegenständlichen Erfindung der Verlauf der Karkasse 6 so ausgelegt, dass im drucklosen Zustand des Reifens und wenn dieser auf einer Feige montiert ist, die Karkasse 6 im unteren Seitenwandbereich flacher, demnach mit größerem Radius ausgeführt wird als im oberen Seitenwandbereich, um durch die Verformung unter Innendruck gezielt eine Vorspannung mit nach außen wirkenden Zugspannungen im Hochschlag 6a der Karkasse 6 zu erzeugen. Damit wird erreicht, dass der Hochschlag 6a der Karkasse 6 beim Wechsel vom eingefederten in den nicht eingefederten Zustand während des Abrollens des Reifens im Wesentlichen nur schwankenden Zugspannungen unterworfen wird.

Fig. 1 und Fig. 2 zeigen eine mögliche Ausführung der diesbezüglichen Auslegung des Verlaufes der Karkasse 6 bei der im drucklosen Zustand (Fig. 1) jeweils zwischen einer der Stellen A, B und der Stelle Bₘₐₓ, welche die Stelle mit der größten Querschnittsbreite ist, im Wesentlichen je ein Radius R₁, R₂ gewählt wird. Dabei ist A die Anbindungsstelle der Karkasse 6 zum Gürtel 2. Im Reifenquerschnitt ergibt sich A als Schnittpunkt einer von der Gürtelkante zum Reifenmittelpunkt gezogenen Geraden mit der Karkasse 6. B ist die Anbindungsstelle der Karkasse 6 zur Feige 10 und im Reifenquerschnitt der Schnittpunkt einer zur Reifenachse parallelen und durch die radial äußerste Berührungsstelle des Wulstbereiches mit der Feige 10 verlaufenden Geraden mit der Karkasse 6. Der Radius R₁ ist zumindest über den größten Teil der Länge der Karkasse 6 zwischen A und Bₘₐₓ und der Radius R₂ zumindest über den größten Teil der Länge der Karkasse 6 zwischen Bₘₐₓ und B gegeben. Dabei ist R₁ < R₂, insbesondere beträgt das Verhältnis der Radien R₁ zu R₂ zwischen 1:1,1 und 1:2,2, vorzugsweise zwischen 1:1,4 und 1:2,0.

Eine optimale Auslegung sieht vor, dass im drucklosen Zustand der Feige 10 im Bereich der Stelle B der größte Radius der Karkasse 6, im Bereich der Stelle A bei der Gürtelkante der kleinste vorliegt und zwischen den Stellen A und B sich der Radius der Karkasse 6, und bei der üblichen Anordnung auch der der Seitenwand 3, kontinuierlich vergrößert.

Unter Innendruck (Fig. 2) stellt sich wieder eine Gleichgewichtskontur ein, was, wie Fig. 2 zeigt, zur Folge hat, dass sich die Reifenseitenwände so verformen, dass sich die Stelle mit der größten Querschnittsbreite Bₘₐₓ in Richtung Wulst verlagert und der Radius bzw. die Radien im Bereich zwischen Bₘₐₓ und der Stelle A größer, jener bzw. jene zwischen Bₘₐₓ und der Stelle B kleiner werden. Damit stellt sich ein annähernd konstanter Radius über den Verlauf der Karkasse 6 zwischen A und B ein. Dies erzeugt die erwünschten, vom Reifen nach außen wirkenden Zugspannungen im Karkasshochschlag 6a, was in Fig. 2 durch den Pfeil angedeutet ist.

Gleichzeitig kann ein erfindungsgemäß ausgeführter Reifen mit, wie nachfolgend beschrieben wird, kurzen Seitenwänden und kurzer Karkasse 6, in jenen Bereichen, wo diese zumindest im Wesentlichen in den Seitenwänden verläuft, versehen werden. Nach dem Stand der Technik ist es üblich, die Kontur der Karkasse in den Reifenseitenwänden so auszulegen, dass sie ihrer Neutralen folgt und daher gemäß der Gleichgewichtsformel ausgelegt ist. Bei einer derartigen Auslegung der Karkasse bzw. der Reifenseitenwandkontur ist auch die Heizform für den Reifen im Bereich der Seitenwandschalen von ihrer Form bzw. Kontur so ausgelegt, dass möglichst keine Änderung der Karkassen-Kontur in den Seitenwänden und damit der Reifenseitenwandkontur ausgehend von der Kontur in der Heizform bis zur Kontur des Reifens unter Innendruck auftritt. Dadurch sollen unnötige Spannungen im Reifen, die durch Änderungen der Reifengestalt auftreten könnten, vermieden werden.

Unter kurzer Auslegung der Karkasse 6 ist nun zu verstehen, dass die Karkasse 6 in den Seitenwänden 3 kürzer ausgeführt ist als es ihrer Länge nach der neutralen Auslegung gemäß der Gleichgewichtsformel bzw. Gleichgewichtsfigur entsprechen würde. Die gegenüber der Gleichgewichtsfigur verkürzte Länge der Karkasse 6 ist zwischen den Stellen A und B eingestellt, wobei in diesen Bereichen die Länge der Karkasse 6 zwischen 80 % und 97 %, insbesondere zwischen 85 und 95 %, der sich rechnerisch ergebenden, entsprechenden Länge der Karkasse 6 in diesen Bereichen gemäß der Gleichgewichtsfigur (Gleichgewichtsformel) beträgt.

Diese Auslegung der Karkasse 6 ergibt unter Innendruck und im unter Last abgeplatteten Zustand des Reifens einen Verlauf der Karkasse 6, wo die Kräfte, die durch den Innendruck hervorgerufen werden, in den Schulterbereichen der Bodenaufstandsfläche weniger stark übertragen werden als es bei einer Auslegung nach der Gleichgewichtsfigur der Fall wäre. Wie Fig. 4 zeigt, wo die strichlierte Linie die Außenkontur des Reifens aus Fig. 3 (druckloser Zustand) wiedergibt, wird unter Innendruck der Reifen sowohl im Laufstreifenbereich als auch im Bereich der Seitenwände nach außen in eine rundere Kontur verformt, dadurch auch breiter, wobei die Lage der Gürtelkanten gegenüber dem drucklosen Zustand zumindest gleich bleibt, insbesondere sogar eine Verringerung des Abstandes der Gürtelkanten zur Reifenachse stattfindet. Im Zenitbereich wächst der Reifen in radialer Richtung. Die Druckverteilung in der gesamten Bodenaufstandsfläche des Reifens wird somit gleichmäßiger als bei einer Auslegung der Karkasse nach der Gleichgewichtsfigur bzw. der Gleichgewichtsformel.

Fig. 5 zeigt den Verlauf des Karkassradius über der Seitenwandhöhe, wobei entlang der x-Achse die Reifenhöhe in Millimeter und entlang der y-Achse der Radius der Karkasse 6, ebenfalls in Millimeter, angegeben ist. Die punktierte, im Wesentlichen gerade verlaufende Linie zeigt den Sachverhalt bei einem nach dem Stand der Technik ausgeführten Reifen, wo der Verlauf der Karkasse gemäß der Neutralen, demnach gemäß der Gleichgewichtsformel, ausgelegt ist. Die durchgezogene Linie zeigt den Verlauf bei einer, wie oben ausgeführt, kurz ausgelegten Karkasse. Die strichlierte Linie zeigt die Verhältnisse bei einer Karkasse, die kurz ausgelegt ist und bei der auch der Radius ausgehend von der Stelle A bis zur Stelle B kontinuierlich größer wird.

Bei einer erfindungsgemäßen Auslegung der Kontur der Karkasse 6 ist es günstig, wenn über die Reifenform keine weiteren Maßnahmen zur Beeinflussung der Krümmung der Lauffläche getroffen werden, um unerwünschte Auswirkungen auf bestimmte Reifeneigenschaften, beispielsweise Abrieb und Rollwiderstand, zu vermeiden. Im Rahmen der gegenständlichen Erfindung ist es von Vorteil, wenn die Laufflächenkrümmung vergleichsweise flach gewählt wird und eine entsprechende Krümmung mit einem oder mit zwei Radien vorgenommen wird.

## Patentansprüche

1. Fahrzeugluftreifen mit einem profilierten Laufstreifen (1), einem insbesondere mehrere Lagen umfassenden Gürtelverband (2), Wulstbereichen (4) mit Wulstkernen (5) und mit einer ein- oder mehrlagig ausgeführten Karkasse (6) mit zumindest im Wesentlichen radial verlaufenden Festigkeitsträgern, wobei die Karkasse (6) um die Wulstkerne(5) und jeweils als Hochschlag zurück in die Seitenwände (3) verläuft und wobei im unbelasteten und drucklosen Zustand des Reifens sowie wenn dieser auf einer Felge montiert ist, die Auslegung des Verlaufes der Karkasse (6) in den Reifenseitenwänden (3) vom sich unter Innendruck einstellenden Verlauf abweicht, wobei im unbelasteten, drucklosen Zustand des Reifens, wenn dieser auf einer Felge (10) montiert ist, die Karkasse (6) im Bereich zwischen ihrer Anbindungsstelle (A) zum Gürtel (2) und an der Stelle (Bₘₐₓ) mit der größten Querschnittsbreite einen Radius bzw. die Radien in jenem Bereich der Karkasse (6), der zwischen der Stelle (Bₘₐₓ) mit der größten Querschnittsbreite und ihrer Anbindungsstelle (B) zur Felge (10) verlauft,
**dadurch gekennzeichnet,**
**dass** das Verhältnis des kleinsten Radius der Karkasse (6) zum größten Radius der Karkasse zwischen 1:1,1 und 1:2,2, insbesondere zwischen 1:1,4 und 1:2,0, beträgt.

2. Fahrzeugluftreifen nach Anspruch 1, **dadurch gekennzeichnet, dass** der Radius der Karkasse (6) im Bereich der Anbindungsstelle (A) zum Gürtel (2) am kleinsten, im Bereich der Anbindungsstelle (B) zum Wulst (4) am größten ist, und dass sich zwischen diesen beiden Steilen (A, B) der Radius der Karkasse (6) kontinuierlich vergrößert.

## Claims

1. Pneumatic vehicle tyre with a profiled tread rubber (1), breaker belt assembly (2), in particular comprising a number of layers, bead regions (4) with bead cores (5) and with a carcass (6) in the form of one or more layers and having at least substantially radially running reinforcing elements, the carcass (6) running around the bead cores (5) and back into the sidewalls (3) in each case as a turned-up portion and, in the unloaded and pressureless state of the tyre and also when it is fitted on a rim, the design of the profile of the carcass (6) in the tyre sidewalls (3) differing from the profile that is obtained when it is under internal pressure, the carcass (6) having in the unloaded, pressureless state of the tyre, when it is mounted on a rim (10), in the region between its point of connection (A) to the breaker belt (2) and the point (Bₘₐₓ) with the greatest cross-sectional width a radius or a number of radii which are all smaller than the radius or the radii in that region of the carcass (6) which runs between the point (Bₘₐₓ) with the greatest cross-sectional width and its point of connection (B) to the rim (10),
**characterized**
**in that** the ratio of the smallest radius of the carcass (6) to the greatest radius of the carcass is between 1:1.1 and 1:2.2, in particular between 1:1.4 and 1:2.0.

2. Pneumatic vehicle tyre according to Claim 1, **characterized in that** the radius of the carcass (6) is smallest in the region of the point of connection (A) to the breaker belt (2) and is greatest in the region of the point of connection (B) to the bead (4), and **in that** between these two points (A, B) the radius of the carcass (6) increases continuously.

## Revendications

1. Bandage pneumatique pour véhicule, qui présente une bande de roulement profilée (1), un ensemble de ceinture (2) qui comprend en particulier plusieurs couches, des parties de bourrelet (4) qui présentent une âme de bourrelet (5), ainsi qu'une carcasse (6) réalisée en une ou plusieurs couches et qui présente des renforts qui s'étendent au moins essentiellement dans le sens radial, la carcasse (6) passant autour des âmes de bourrelet (5) pour remonter dans les parois latérales (3), et lorsque le bandage n'est ni chargé ni gonflé et est monté sur une jante, le développement de la carcasse (6) dans les parois latérales (3) du bandage diffère de son développement qui s'établit sous l'action de la pression intérieure, tandis que lorsque le bandage n'est ni chargé ni gonflé et est monté sur une jante (10), la carcasse (6) présente dans la partie comprise entre l'emplacement (A) de sa liaison à la ceinture (2) et l'emplacement (Bₘₐₓ) où la section transversale est la plus grande un rayon ou plusieurs rayons tous plus petits que le rayon ou les rayons dans la partie de la carcasse (6) qui s'étend entre l'emplacement (Bₘₐₓ) où la section transversale a la plus grande largeur et l'emplacement (B) où elle se raccorde à la jante (10),
**caractérisé en ce que**
le rapport entre le plus petit rayon de la carcasse (6) et le plus grand rayon de la carcasse est compris entre 1 : 1,1 et 1 : 2,2 et en particulier entre 1 : 1,4 et 1 : 2,0.

2. Bandage pneumatique pour véhicule selon la revendication 1, **caractérisé en ce que** le rayon de la carcasse (6) est le plus petit dans la partie de l'emplacement (A) du raccordement à la ceinture (2) et est le plus grand dans la partie de l'emplacement (B) de raccordement au bourrelet (4), et **en ce que** le rayon de la carcasse (6) augmente de manière continue entre ces deux emplacements (A, B).
